(19) Europäisches Patentamt
European Patent Office
Office européen des brevets

(11) **EP 4 517 607 A1**

(12) **EUROPEAN PATENT APPLICATION**
published in accordance with Art. 153(4) EPC

(43) Date of publication:
05.03.2025 Bulletin 2025/10

(51) International Patent Classification (IPC):
**G06N 20/00** (2019.01)   **G06N 20/20** (2019.01)

(21) Application number: 22940156.7

(52) Cooperative Patent Classification (CPC):
**G06N 20/00; G06N 20/20**

(22) Date of filing: 27.04.2022

(86) International application number:
**PCT/JP2022/019114**

(87) International publication number:
**WO 2023/209878 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aising Ltd.**
**Tokyo 107-0052 (JP)**

(72) Inventors:
• **SUGAWARA Shimon**
**Tokyo 107-0052 (JP)**
• **IDESAWA Junichi**
**Tokyo 107-0052 (JP)**

(74) Representative: **Kilian Kilian & Partner mbB**
**Zielstattstraße 23a**
**81379 München (DE)**

(54) **ABNORMALITY DETECTION DEVICE, SYSTEM, METHOD, AND PROGRAM**

(57)    There is provided an anomaly detection apparatus, the anomaly detection apparatus including: a data acquisition unit acquiring evaluation target data; an anomaly detection unit performing anomaly detection about the evaluation target data based on an inference output generated based on input of the evaluation target data to one or more tree structure models; and an updated model generation unit generating one or more updated tree structure models by performing an additional learning process based on the evaluation target data and a forgetting learning process for the one or more tree structure models; wherein if a predetermined condition is satisfied, the one or more updated tree structure models are used instead of the one or more tree structure models in the anomaly detection unit and the updated model generation unit.

FIG. 13

## Description

Technical Field

The present invention relates to an apparatus and the like that perform anomaly detection of data and the like.

Background Art

Recently, due to increasing attention to artificial intelligence (AI), research and development of various machine learning techniques has been carried out (for example, Patent Literature 1).

Further, recently, research and development has been carried out on a technique of performing anomaly detection by mounting a model obtained by applying machine learning techniques or statistical techniques to data collected in advance, on various apparatuses.

Citation List

Patent Literature

Patent Literature 1: Patent Publication No. 6795240

Summary of Invention

Technical Problem

At the time of performing this kind of anomaly detection, there may be a case where the trend of data obtained in advance and the trend of data obtained ex post facto after operation are different from each other. Such a case occurs, for example, when so-called concept drift occurs due to deterioration over time of an apparatus related to data for which anomaly detection is to be performed or when the amount or quality of data obtained in advance is insufficient.

There is a possibility that, as a result of such change in the trend of data, anomaly detection cannot be appropriately executed. That is, there is a possibility that a state that should be judged to be normal from a viewpoint of the trend of data obtained ex post facto is judged to be anomalous, or, on the contrary, a state that should be judged to be anomalous from a viewpoint of the trend of data obtained ex post facto is judged to be normal.

The present invention has been made under the technical background described above, and an object thereof is to provide an anomaly detection technique capable of responding to change in the trend of ex post facto data.

One skilled in the art would easily understand still other objects, and operation and effects of the present invention by referring to the description of the specification below.

Solution to Problem

The technical problem described above can be solved by an anomaly detection apparatus or the like having the configuration below.

That is, the anomaly detection apparatus according to the present invention includes: a data acquisition unit acquiring evaluation target data; an anomaly detection unit performing anomaly detection about the evaluation target data based on an inference output generated based on input of the evaluation target data to one or more tree structure models; and an updated model generation unit generating one or more updated tree structure models by performing an additional learning process based on the evaluation target data and a forgetting learning process for the one or more tree structure models; and, if a predetermined condition is satisfied, the one or more updated tree structure models are used instead of the one or more tree structure models in the anomaly detection unit and the updated model generation unit.

According to such a configuration, a tree structure model is updated by performing the forgetting learning process in addition to the additional learning process based on new data, and anomaly detection is performed based on an updated model, and, therefore, it is possible to provide an anomaly detection technique capable of responding to change in the trend of ex post facto data.

The forgetting learning process may be such that is performed by subtracting an update amount for forgetting learning from inferred values associated with all leaf nodes of each of the one or more tree structure models.

According to such a configuration, it is possible to perform forgetting learning at a high speed by a simple process of subtraction.

The update amount for forgetting learning may be such that is set based on a predetermined window width.

According to such a configuration, it is possible to perform forgetting learning based on a constant criterion of window width.

The update amount for forgetting learning may be, in each of the one or more tree structure models, a value obtained by dividing an update amount for additional learning generated based on the inference output by the number of leaf nodes of the tree structure model.

According to such a configuration, an update amount according to an update amount for additional learning can be set as the update amount for forgetting learning.

The additional learning process may be such that is performed by adding the update amount for additional learning generated based on the inference output to an inferred value associated with a leaf node involved in the generation of the inference output among the leaf nodes of each of the one or more tree structure models.

According to such a configuration, it is possible to perform additional learning at a high speed by a simple process of addition.

The condition may be that the one or more updated tree structure models have been generated.

According to such a configuration, if one or more updated tree structure models exist, the one or more updated tree structure models are used instead of one or more tree structure models in anomaly detection and updated model generation.

The anomaly detection unit may be such that performs the anomaly detection based on comparison between the inference output and a predetermined threshold.

According to such a configuration, it is possible to perform anomaly detection with a predetermined threshold as a reference.

As the one or more tree structure models, there may be one tree structure model; and the inference output in the anomaly detection unit may be an output value associated with one leaf node of the tree structure model.

According to such a configuration, it is possible to identify an inference output by one tree structure model.

As the one or more tree structure models, there may be a plurality of tree structure models; and the inference output in the anomaly detection unit may be an arithmetic mean value of output values associated with each leaf node of each of the tree structure models.

According to such a configuration, it is possible to generate an inference output using a plurality of tree structure models.

As the one or more tree structure models, there may be a plurality of tree structure models; and the inference output in the anomaly detection unit may be a total sum of output values associated with each leaf node of each of the tree structure models.

According to such a configuration, it is possible to generate an inference output using a plurality of tree structure models.

The present invention seen from another aspect is an anomaly detection system, the anomaly detection system including: a data acquisition unit acquiring evaluation target data; an anomaly detection unit performing anomaly detection about the evaluation target data based on an inference output generated based on input of the evaluation target data to one or more tree structure models; and an updated model generation unit generating one or more updated tree structure models by performing an additional learning process based on the evaluation target data and a forgetting learning process for the one or more tree structure models; and, if a predetermined condition is satisfied, the one or more updated tree structure models are used instead of the one or more tree structure models in the anomaly detection unit and the updated model generation unit.

The present invention seen from another aspect is an anomaly detection method, the anomaly detection method including: a data acquisition step of acquiring evaluation target data; an anomaly detection step of performing anomaly detection about the evaluation target data based on an inference output generated based on input of the evaluation target data to one or more tree structure models; and an updated model generation step of generating one or more updated tree structure models by performing an additional learning process based on the evaluation target data and a forgetting learning process for the one or more tree structure models; and, if a predetermined condition is satisfied, the one or more updated tree structure models are used instead of the one or more tree structure models in the anomaly detection step and the updated model generation step.

The present invention seen from another aspect is an anomaly detection program, the anomaly detection program including: a data acquisition step of acquiring evaluation target data; an anomaly detection step of performing anomaly detection about the evaluation target data based on an inference output generated based on input of the evaluation target data to one or more tree structure models; and an updated model generation step of generating one or more updated tree structure models by performing an additional learning process based on the evaluation target data and a forgetting learning process for the one or more tree structure models; and, if a predetermined condition is satisfied, the one or more updated tree structure models are used instead of the one or more tree structure models in the anomaly detection step and the updated model generation step.

The present invention seen from another aspect is an information processing apparatus, the information processing apparatus including: a data acquisition unit acquiring evaluation target data; an anomaly detection unit performing anomaly detection about the evaluation target data based on an inference output generated based on input of the evaluation target data to one or more tree structure models; and an updated model generation unit generating one or more updated tree structure models by performing an additional learning process based on the evaluation target data and a forgetting learning process for the one or more tree structure models; and, if a predetermined condition is satisfied, the one or more updated tree structure models are used instead of the one or more tree structure models in the anomaly detection unit and the updated model generation unit.

Advantageous Effect of Invention

According to the present invention, it is possible to provide an anomaly detection technique capable of responding to change in the trend of ex post facto data.

Brief Description of Drawings

[Figure 1] Figure 1 is a hardware configuration diagram of an anomaly detection apparatus (a first embodiment).

[Figure 2] Figure 2 is a functional block diagram of the anomaly detection apparatus (the first embodiment).

[Figure 3] Figure 3 is a general flowchart about a tree structure model generation process (the first embodiment).

[Figure 4] Figure 4 is a table showing an example of data for tree structure generation (the first embodiment).

[Figure 5] Figure 5 is a table showing an example of statistical data (the first embodiment).

[Figure 6] Figure 6 is a detailed flowchart about the tree structure model generation process (the first embodiment).

[Figure 7] Figure 7 is a diagram about node reference order in a tree structure model (the first embodiment).

[Figure 8] Figure 8 is a general flowchart about a pre-training operation (the first embodiment).

[Figure 9] Figure 9 is a table showing an example of data for learning (the first embodiment).

[Figure 10] Figure 10 is a detailed flowchart about an inferred value identification process (the first embodiment).

[Figure 11] Figure 11 is a detailed flowchart of a tree structure model update process (the first embodiment).

[Figure 12] Figure 12 is a conceptual diagram about the update process (the first embodiment).

[Figure 13] Figure 13 is a general flowchart about an anomaly detection operation (the first embodiment).

[Figure 14] Figure 14 is a conceptual diagram of a forgetting learning process (the first embodiment).

[Figure 15] Figure 15 is a general flowchart about a tree structure model generation process (a second embodiment).

[Figure 16] Figure 16 is a general flowchart about a pre-training operation (the second embodiment).

[Figure 17] Figure 17 is a detailed flowchart about an inferred value generation process (the second embodiment).

[Figure 18] Figure 18 is a detailed flowchart of a tree structure model update process (the second embodiment).

[Figure 19] Figure 19 is a conceptual diagram of the update process (the second embodiment).

[Figure 20] Figure 20 is a general flowchart about an anomaly detection operation (the second embodiment).

[Figure 21] Figure 21 is a conceptual diagram of a forgetting learning process (the second embodiment).

[Figure 22] Figure 22 is a conceptual diagram of an update process (a third embodiment).

[Figure 23] Figure 23 is a conceptual diagram of a forgetting learning process (the third embodiment).

[Figure 24] Figure 24 is a conceptual diagram of a forgetting learning process (a modification).

Description of Embodiments

Embodiments of the present invention will be described in detail with reference to accompanying drawings.

(1. First embodiment)

In a first embodiment, an example of applying the present invention to an anomaly detection apparatus 100 will be described. Here, the anomaly detection apparatus 100 may be a dedicated apparatus for performing anomaly detection or may be configured as a part of an apparatus that includes other functions. Further, the anomaly detection apparatus 100 may be merely realized on an information processing apparatus such as a PC.

(1.1 Configuration)

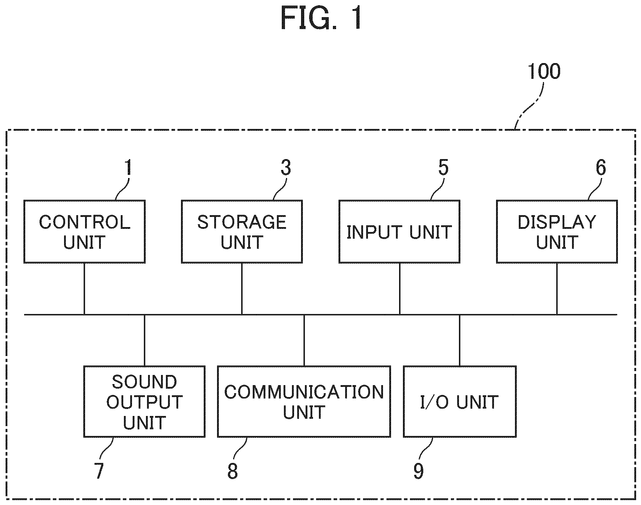

Figure 1 is a hardware configuration diagram of the anomaly detection apparatus 100. As apparent from Figure 1, the anomaly detection apparatus 100 is provided with a control unit 1, a storage unit 3, an input unit 5, a display unit 6, a sound output unit 7, a communication unit 8, and an I/O unit 9, and these components are connected to one another via a bus or the like.

The control unit 1 is a CPU and performs various arithmetic processing. More specifically, the control unit 1 performs a process for executing a program that realizes various operations to be described later. The control unit 1 is not limited to a CPU and may be an apparatus having other arithmetic functions, such as a GPU.

The storage unit 3 is a volatile or nonvolatile storage device such as a ROM, a RAM, a hard disk, or a flash memory, and stores the program that realizes the various operations to be described later and various data.

The input unit 5 has a function of detecting an input from an input device not shown, which is equipped for the apparatus, and providing the input to the control unit 1 or the like.

The display unit 6 has a function of performing control to show display on a display device not shown.

The sound output unit 7 has a function of performing control to output a sound to a sound output device such as a speaker not shown.

The communication unit 8 is a communication unit for performing communication with an external apparatus and performs transfer of data with the external apparatus.

The I/O unit 9 is a device to be an interface for performing input to/output from external apparatuses.

The hardware configuration shown in Figure 1 is a mere exemplification. Therefore, the hardware configuration may be a different configuration, and, for example, a part of the components or functions may be integrated or divided. Further, various processes to be described later may be executed by the program or may be realized as a circuit by an IC such as an FPGA.

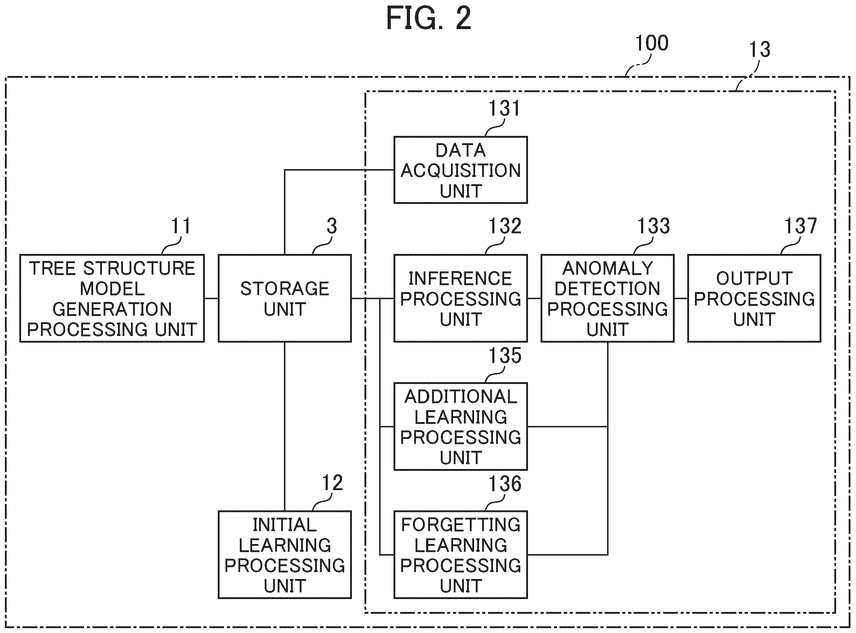

Figure 2 is a functional block diagram of the anomaly detection apparatus 100. As apparent from Figure 2, the anomaly detection apparatus 100 is provided with the storage unit 3, a tree structure model generation processing unit 11, an initial learning processing unit 12, and an anomaly detection unit 13.

The tree structure model generation processing unit 11 performs a process for reading data from the storage unit 3 to generate a tree structure model, and stores the tree structure into the storage unit 3. The initial learning processing unit 12 reads data to be a learning target, learning parameters, and the like from the storage unit 3, performs initial learning, and stores a learned model into the storage unit 3. The anomaly detection unit 13 exchanges data with the storage unit 3 to perform an anomaly detection process, an additional learning process, a forgetting learning process, and an anomaly output process.

The anomaly detection unit 13 is provided with a data acquisition unit 131, an inference processing unit 132, an anomaly detection processing unit 133, an output processing unit 137, an additional learning processing unit 135, and a forgetting learning processing unit 136.

The data acquisition unit 131 performs a process for acquiring evaluation target data from a sensor, an external apparatus, or the like not shown and causing the evaluation target data to be stored into the storage unit 3. The inference processing unit 132 reads a learned model from the storage unit 3 and executes an inference process based on the evaluation target data to generate an inference output used for anomaly detection. The anomaly detection processing unit 133 performs anomaly detection about the evaluation target data based on the inference output. If an anomaly is detected, the output processing unit 137 outputs the anomaly to the display unit 6 or the sound output unit 7.

The additional learning processing unit 135 reads the evaluation target data and the learned model to perform the additional learning process, and stores an additionally learned model into the storage unit 3. Further, the forgetting learning processing unit 136 reads the learned model to perform the forgetting learning process, and stores the learned model for which forgetting learning has been performed, into the storage unit 3.

(1.2 Operations)

In the present embodiment, the anomaly detection apparatus 100 performs a tree structure model generation operation, a pre-training operation, and an anomaly detection operation as described below. The series of processes may be continuously performed, or a part of the operations may be executed in advance. For example, the tree structure model generation operation and the pre-training operation may be executed before operation, and the anomaly detection operation may be executed after the operation.

(1.2.1 Tree structure model generation operation)

First, a description will be made on an operation for generating a tree structure model to be a basis for learned model generation, which is used in pre-training, anomaly detection, and the like to be described later.

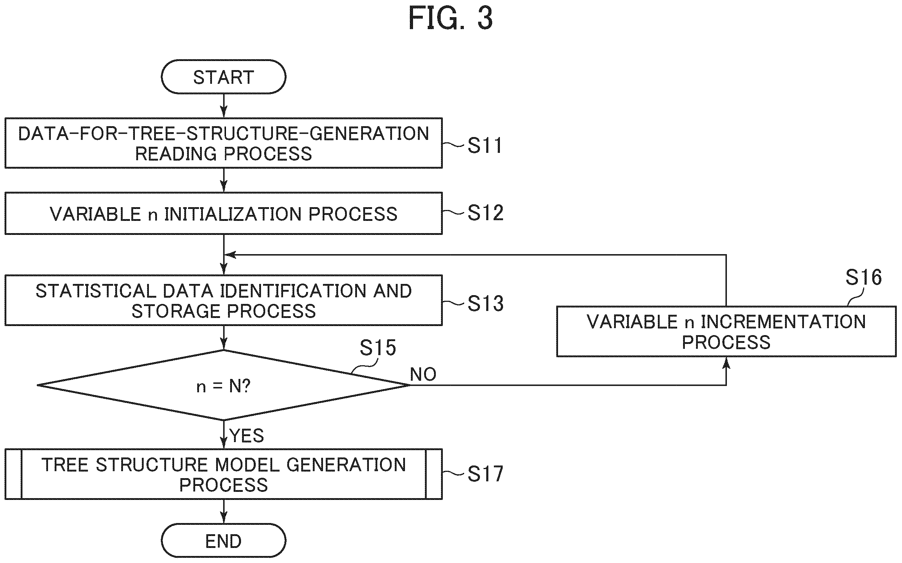

Figure 3 is a general flowchart about a tree structure model generation process. As apparent from Figure 3, when the process starts, the tree structure model generation processing unit 11 performs a process for reading data for tree structure generation from the storage unit 3 (S11).

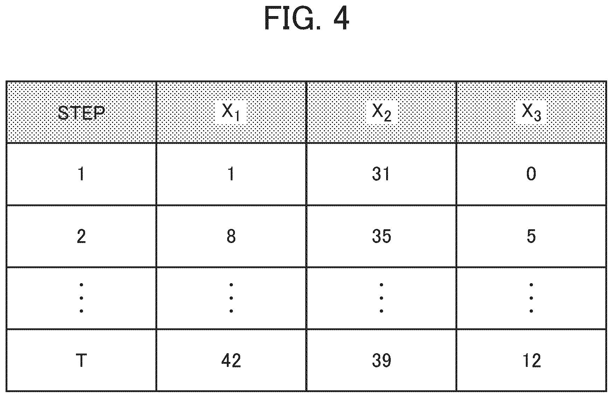

Figure 4 is a table showing an example of the data for tree structure generation. As apparent from Figure 4, in the present embodiment, the data for tree structure generation is configured with three pieces of sequential data $X_1$ to $X_3$, each of which is configured with T steps. In the first sequential data $X_1$, integer values are stored like $1 \rightarrow 8 \rightarrow ... \rightarrow 42$. In the second sequential data $X_2$, integer values are stored like $31 \rightarrow 35 \rightarrow ... \rightarrow 39$. In the third sequential data $X_3$, integer values are stored like $0\text{-}>5\text{-}>...\text{-}>12$.

Returning to Figure 3, when the process for reading the data for tree structure generation is completed, the tree structure model generation processing unit 11 performs a process for initializing an integer n used in a repetition process to be described later (S12). For example, the integer n is set to 1.

After the initialization process, the tree structure model generation processing unit 11 performs a statistical data generation process and storage process for sequential data $X_n$ corresponding to the value of the integer n. In the present embodiment, the statistical data is a maximum value and a minimum value of the sequential data. Therefore, when the integer n is 1, a maximum value and a minimum value are identified from the data constituting the first sequential data $X_1$ and stored.

After the statistical data storage process, the tree structure model generation processing unit 11 repeatedly performs such a statistical data identification and storage process (S13) until the value of n corresponds to a predetermined maximum value N (S15: YES) while incrementing the integer n by adding 1 to the integer n (S16). In the present embodiment, N is 3.

That is, when the integer n is 2, a maximum value and a minimum value are identified from the data constituting the second sequential data $X_2$ and stored. That is, when the integer n is 3, a maximum value and a minimum value are identified from the data constituting the third sequential data $X_3$ and stored.

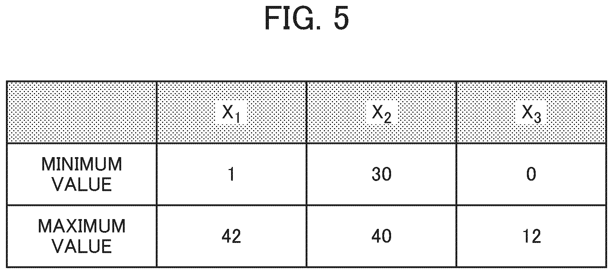

Figure 5 is a table showing an example of statistical data generated by the above process (S15: YES). As apparent from Figure 5, the maximum value and the minimum value are identified for each of the pieces of sequential data $X_1$ to $X_3$.

Though a maximum value and a minimum value are exemplified as the statistical data in the present embodiment, the present invention is not limited to such a configuration. Therefore, other values, such as an average value and a standard deviation, may be used as the statistical data.

Returning to Figure 3, when the series of processes for generating the statistical data is completed, the tree structure model generation processing unit 11 performs the tree structure model generation process (S17).

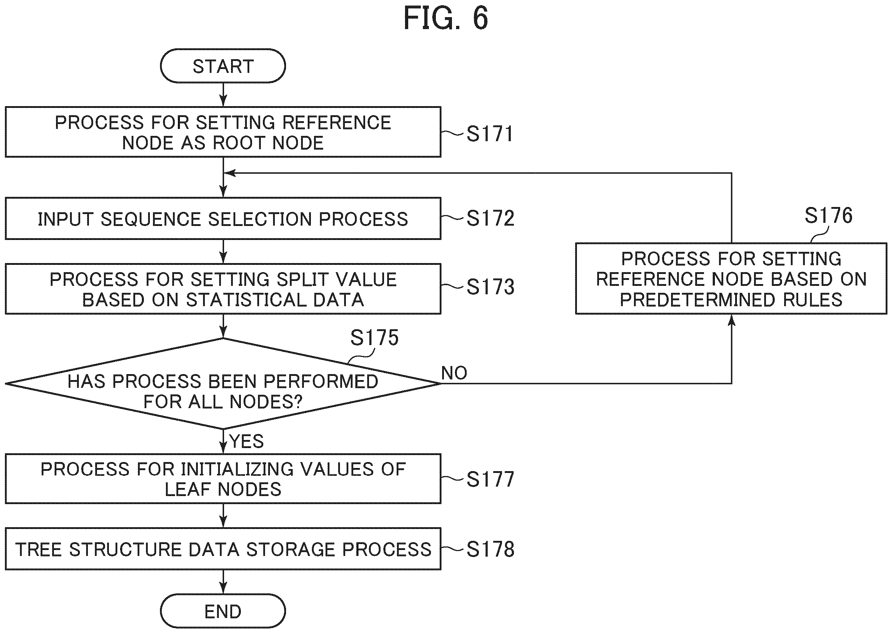

Figure 6 is a detailed flowchart about the tree structure model generation process. As apparent from Figure 6, when the process starts, a process for setting a root node constituting a tree structure model to be generated, as a reference node is performed (S171).

After the reference node setting process, a process for selecting an input sequence is performed to set a split value for generating a binary tree from the reference node (S172). In the present embodiment, one input sequence is selected from among the three input sequences ($X_1$ to $X_3$).

After the input sequence selection process, a process for setting a split value based on the statistical data is performed (S173). In the present embodiment, a random value between the maximum and minimum values of the selected input sequence is set as the split value.

After the split value setting process, a process for judging whether or not the split value setting process has been performed for all nodes constituting the tree structure (S175). If the process has not been performed for all the nodes yet (S175: NO), a process for setting another node as the reference node according to predetermined rules (S176). In the present embodiment, the reference node is changed in order of depth-first search.

On the other hand, if the split value setting process has been performed for all the nodes (S175: YES), the flow proceeds to the next process on the assumption that a process for setting split values for all the nodes has been completed.

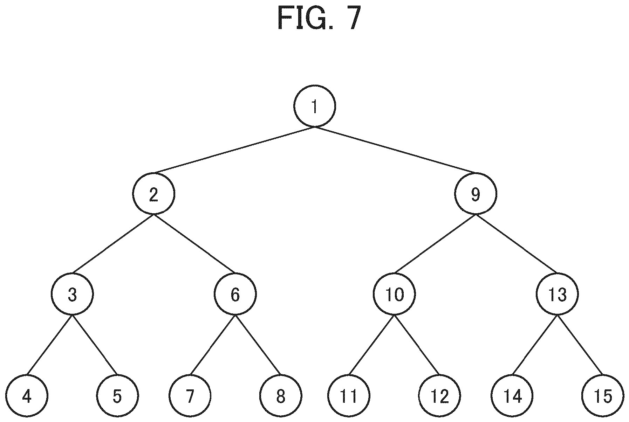

Figure 7 is a diagram about node reference order in a tree structure model according to the present embodiment. In Figure 7, the numbers in each node indicate reference order of the nodes. In the present embodiment, setting of a split value is executed in order of the numbers. Though the nodes are referred to by the depth-first search, the nodes may be referred to in different order.

Returning to Figure 6, after the split value setting process, a process for initializing an output value associated with each leaf node of the generated tree structure is performed (S177). In the present embodiment, all the output values are 0.

After the initialization process, a process for storing the generated tree structure data into the storage unit 3 is performed (S178), and the tree structure model generation process ends.

Though a configuration is adopted in which each tree structure model split value is randomly set based on statistical data in the present embodiment, the present invention is not limited to such a configuration. In short, all that is needed is to obtain a tree structure in which a split value is set for each node. Therefore, the tree structure may be generated by a different method. For example, it is also possible to generate a tree structure by a decision tree method or the like and initialize output values for leaf nodes.

(1.2.2 Pre-training operation)

Next, a description will be made on a pre-training operation using a generated tree structure model.

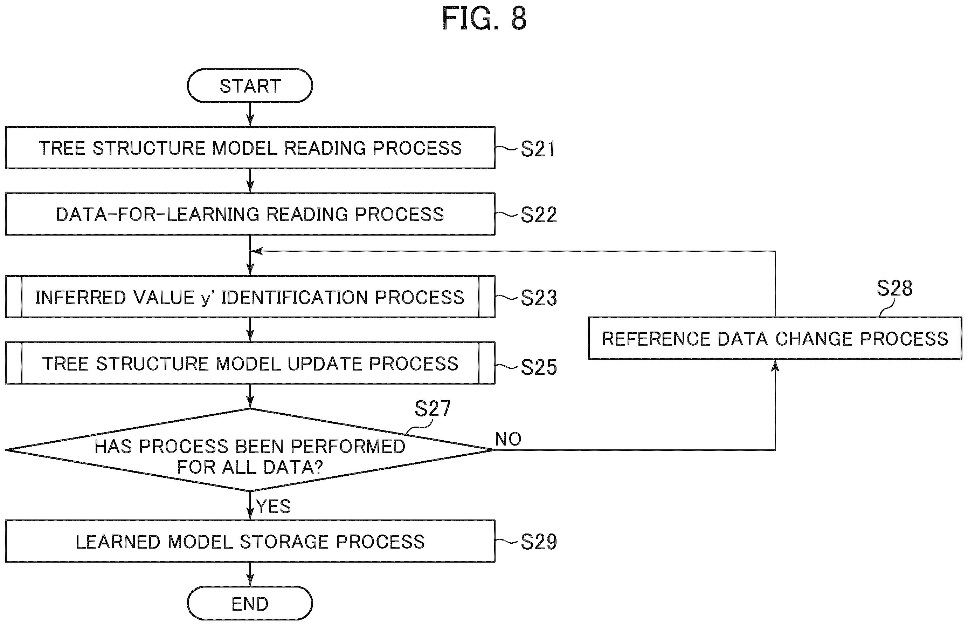

Figure 8 is a general flowchart about the pre-training operation executed by the initial learning processing unit 12. As apparent from Figure 8, when the process starts, the initial learning processing unit 12 performs a process for reading a tree structure model for which split values are set (S21). Further, after the tree structure model reading process, the initial learning processing unit 12 performs a data-for-learning reading process (S22).

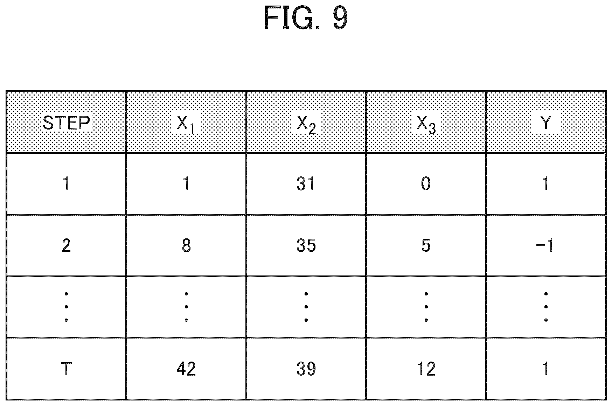

Figure 9 is a table showing an example of data for learning to be read. As apparent from Figure 9, in the present embodiment, the data for learning is configured with a plurality of input sequence data ($X_1$ to $X_3$) each of which is configured with T steps, and corresponding one piece of correct answer sequence data (Y). The correct answer sequence data is set so that it becomes 1 in the case of a normal value and becomes -1 in the case of an anomalous value, and the correct answer sequence data becomes teacher data in supervised learning.

The same data may be used as the data for tree structure generation and the data for learning. The numbers of dimensions of the input sequence data and the correct answer data are exemplifications. Furthermore, numbers assigned as a normal value and an anomalous value in the teacher data may be arbitrary numerical values, and whether positive or negative also does not matter. Further, the normal value and the anomalous value may be asymmetrical (for example, 5 in the case of the normal value and -3 in the case of the anomalous value). Additionally, the numbers may be determined in association with a threshold at the time of anomaly detection, the threshold being to be described later.

Returning to Figure 8, after the data-for-learning reading process, the initial learning processing unit 12 performs an inferred value y' identification process (S23).

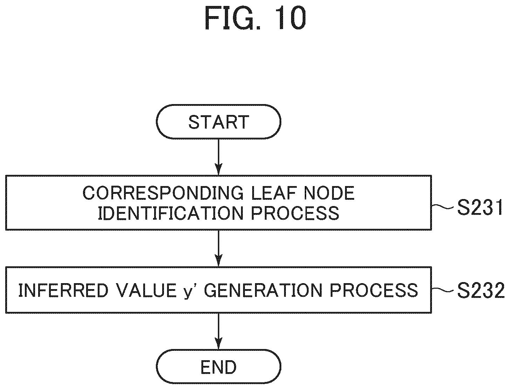

Figure 10 is a detailed flowchart about the inferred value y' identification process (S23). As apparent from Figure 10, when the process starts, the initial learning processing unit 12 performs a process for, by inputting data corresponding to one step of the sequence data ($X_1$ to $X_3$) to the tree structure model, identifying one route based on a split value set for each node and identifying a leaf node (S231).

After identifying the leaf node, the initial learning processing unit 12 performs the inferred value y' identification process (S232). In the present embodiment, the inferred value y' is an arithmetic mean value of all pieces of correct answer data y associated with the leaf node. Here, the term "identification" includes both of identification by reading data from the storage unit 3 and identification by generating a value by a predetermined operation.

Returning to Figure 8, after the inferred value y' identification process, a tree structure model update process is performed (S25).

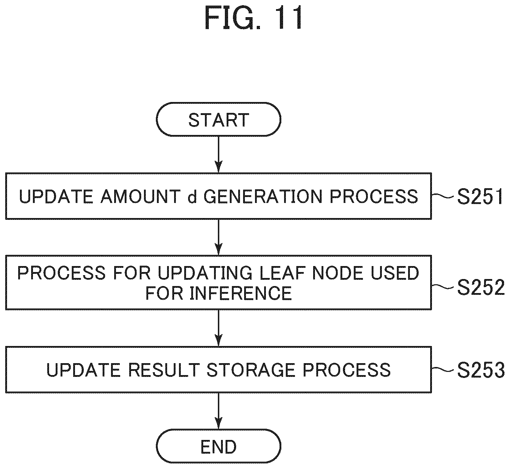

Figure 11 is a detailed flowchart of the tree structure model update process (S25). As apparent from Figure 11, when the process starts, an update amount d generation process is performed first (S251). The update amount d is a value obtained by multiplying a difference between a correct answer value y and the inferred value y' by a learning rate η (0<η≤1).

[Formula 1]

$$d = \eta\,(y - y\,')$$

After the update amount d is calculated, a process for updating the inferred value y' by adding the update value d to the inferred value y' of the leaf node used for the inference is performed (S252) as shown by a formula below. The formula below indicates that a value on the right side is substituted into the left side.

[Formula 2]

$$y\,' = y\,' + d$$

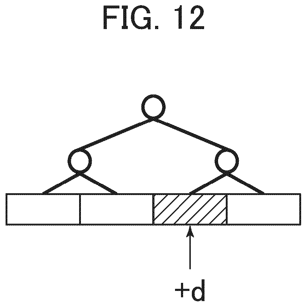

Figure 12 is a conceptual diagram about the update process performed by adding the update amount d to the inferred value y' of the leaf node used for inference. In Figure 12, the update amount d is added to the second leaf node from the right that has been used for inference. It should be noted that the tree structure in Figure 12 is an exemplification and shown being simplified.

After the update process, the initial learning processing unit 12 performs a process for storing an update result (S253), and the tree structure model update process ends.

Returning to Figure 8, when the tree structure model update process is completed, the initial learning processing unit 12 judges whether the series of processes (S23 and S25) has been executed for the data for learning of all the steps or not (S27).

If the processes have not been completed for the data for learning of all the steps yet (S27: NO), a reference data change process is performed (S28), and the series of processes are performed again (S23 and S25). On the other hand, if the processes have been performed for the data for learning of all the steps (S27:

YES), the flow proceeds to the next process on the assumption that the learning process has been performed for all the data for learning.

After the learning process is completed, the initial learning processing unit 12 performs a process for storing learned model data that includes the inferred value y' associated with the leaf node (S29). After that, the initial learning process ends.

(1.2.3 Anomaly detection operation)

Next, a description will be made on an anomaly detection operation using a learned model generated by the initial learning process, a learned tree structure model in the present embodiment.

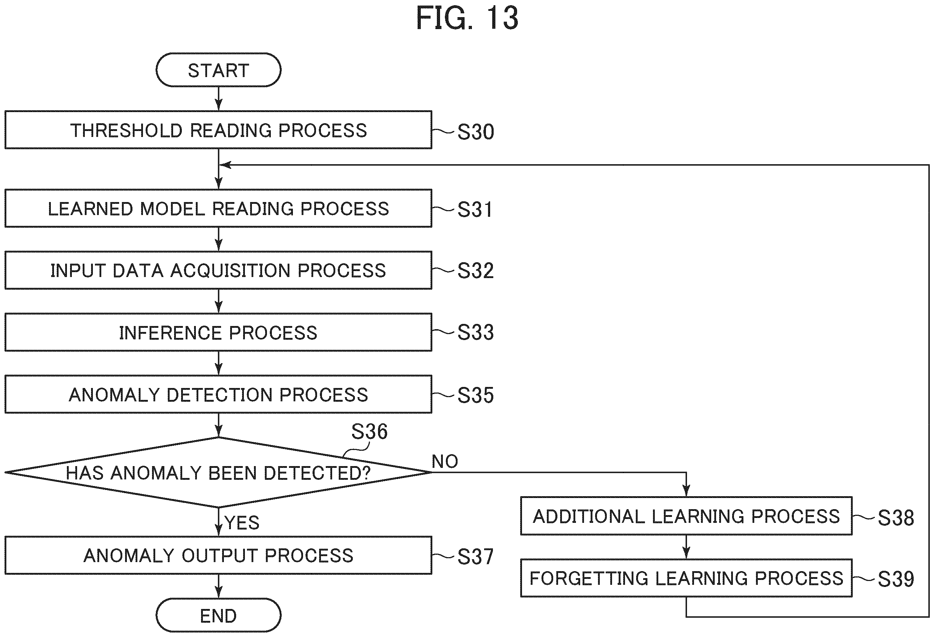

Figure 13 is a general flowchart about the anomaly detection operation. As apparent from Figure 13, when the process starts, the data acquisition unit 131 performs a process for reading a predetermined threshold used in the anomaly detection process to be described later (S30).

After the threshold reading process, the data acquisition unit 131 performs a process for reading the stored newest learned tree structure model from the storage unit 3 (S31). After the learned model reading process, the data acquisition unit 131 performs a process for acquiring input data to be inputted to a tree structure model, which is to be an evaluation target, from the storage unit 3 (S32).

The input data may be acquired from a component other than the storage unit 3, among the components of the anomaly detection apparatus 100 or may be acquired from an external apparatus or the like.

After the input data acquisition process, the inference processing unit 132 performs an inference process similar to that at the time of the initial learning, based on the learned tree structure model that has been read and the acquired input data (S33). That is, the inference processing unit 132 identifies, based on the input data and split values associated with each node of the tree structure model, one route and a leaf node on the tree structure model corresponding to the input data. After that, an inferred value y' associated with the identified leaf node is identified.

After the inference process, the anomaly detection processing unit 133 performs the anomaly detection process based on the read threshold and the identified inferred value y' (S35). More specifically, the anomaly detection processing unit 133 judges whether or not the inferred value y' is equal to or larger than the threshold or smaller than the threshold. If the inferred value y' is equal to or larger than the threshold, the anomaly detection processing unit 133 detects that there is no anomaly, that is, it is normal. On the other hand, if the inferred value y' is smaller than the threshold, the anomaly detection processing unit 133 detects that there is an anomaly.

If an anomaly is detected (S36: YES), a process for outputting a signal that the anomaly has been detected in the input data is performed (S37). The anomaly output process may include, for example, a process for outputting the signal to the display unit 6 or the sound output unit 7.

On the other hand, if an anomaly is not detected (S36: NO), the additional learning processing unit 135 performs the additional learning process based on the input data (S38). More specifically, the additional learning processing unit 135 updates the inferred value y' by adding an update amount d obtained by multiplying a difference between the inferred value y' and a correct answer value y by the learning rate η (see Formula 1) to the inferred value y' of the leaf node used for the inference, similarly to the tree structure model update process (S25) in Figure 11 (see Formula 2). At this time, the correct answer value y is set to 1 because of the case of normal value.

According to such a configuration, it is possible to perform additional learning at a high speed by a simple process of addition.

After the additional learning process, the forgetting learning processing unit 136 performs the forgetting learning process (S39). More specifically, the forgetting learning processing unit 136 performs a process for subtracting an update amount for forgetting learning ε from each of k leaf nodes of the tree structure as shown by the formula below.

[Formula 3]

$$y_k' = y_k' - \varepsilon$$

Here, the update amount for forgetting learning ε is a value obtained by dividing an output 1 by L (a natural number) indicating the number of steps corresponding to a sliding window width.

[Formula 4]

$$\varepsilon = \frac{1}{L}$$

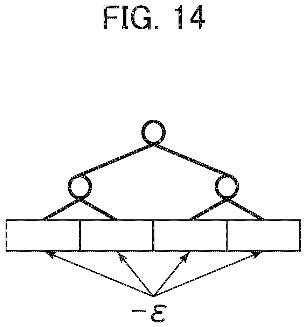

Figure 14 is a conceptual diagram of the forgetting learning process. As apparent from Figure 14, in the present embodiment, the update amount for forgetting learning ε is subtracted from each of the inferred values y' of all the leaf nodes of a tree structure as the forgetting learning process.

According to such a configuration, it is possible to perform forgetting learning at a high speed by a simple process of subtraction. Further, it is possible to perform forgetting learning based on a constant criterion of window width.

Returning to Figure 13, the series of processes is executed again (S31 to S36) after the forgetting learning process. In this case, in the learned model reading process (S31), the learned model for which the additional learning process and the forgetting learning process have been performed is read.

According to such a configuration, a tree structure model is updated by performing the forgetting learning process in addition to the additional learning process based on acquired new data, and anomaly detection is performed based on the updated model, and, therefore, it is possible to provide an anomaly detection technique capable of responding to change in the trend of ex post facto data.

Though the description has been made on the assumption that additional learning and forgetting learning are performed only when an anomaly is not detected (S36) in the present embodiment, the present invention is not limited to such a configuration. Therefore, a configuration in which learning is performed regardless of whether there is an anomaly or not, for example, a configuration in which additional learning is performed regarding the state as a normal state if an anomaly is not detected (S36: NO), and learning is performed regarding the state as an anomalous state if an anomaly is detected (S36: YES) is also possible. At this time, forgetting learning may be performed in any of the cases. Further, the additional process and/or the forgetting learning process may be performed for a part or all of obtained data at any timing, based on an instruction from a user.

(2. Second embodiment)

In the first embodiment, the anomaly detection process and the like are performed using a single tree structure model. In the present embodiment, a description will be made on, among examples using an ensemble learning model that performs learning/inference processes using a plurality of tree structure models, especially an example using a bagging model that generates an inference output based on outputs of a plurality of tree structure models (for example, by taking the average of the outputs of the plurality of tree structure models).

(2.1 Configuration)

Since the hardware configuration of an anomaly detection apparatus according to the present embodiment is almost the same as the configuration according to the first embodiment (see Figures 1 and 2) except for using an ensemble learning model as a learning model, detailed description will be omitted.

(2.2 Operations)

(2.2.1 Tree structure model generation operation)

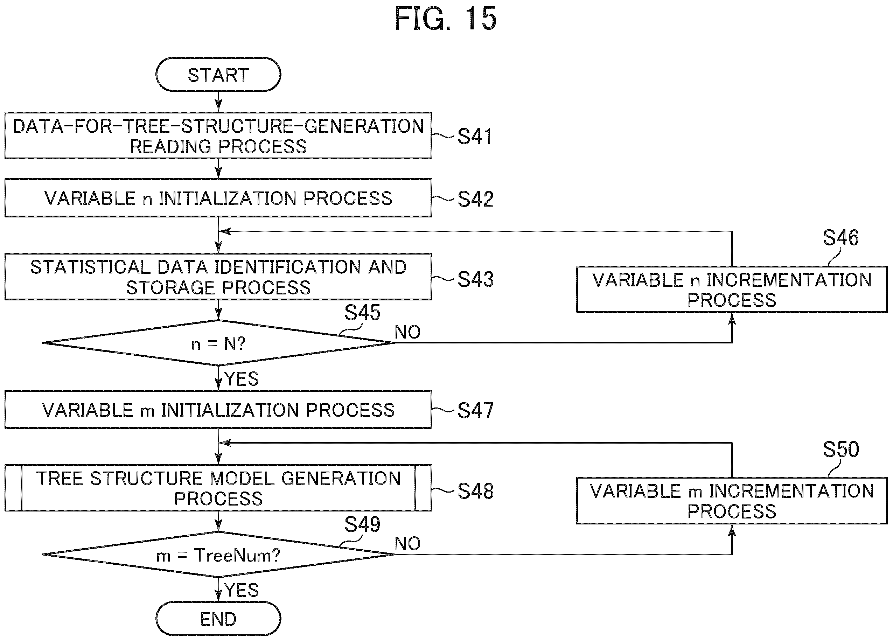

Figure 15 is a general flowchart about a process for generating a plurality of tree structure models. As apparent from Figure 15, the flow of reading data for tree structure generation, and identifying and storing statistical data for each piece of sequence data is the same as the flow according to the first embodiment (S41 to S46).

The present embodiment, however, is different from the first embodiment in that a process for initializing a variable m, for example, to 1 is performed (S47) after the statistical data identification and storage process, and a tree structure model generation process similar to that of the first embodiment (S48; see Figure 6) is repeated (S49: NO) until the variable m becomes equal to TreeNum (S49: YES) while the variable m is being incremented by 1 (S50).

That is, in the present embodiment, TreeNum tree structure models are generated and stored into the storage unit 3.

(2.2.2 Pre-training operation)

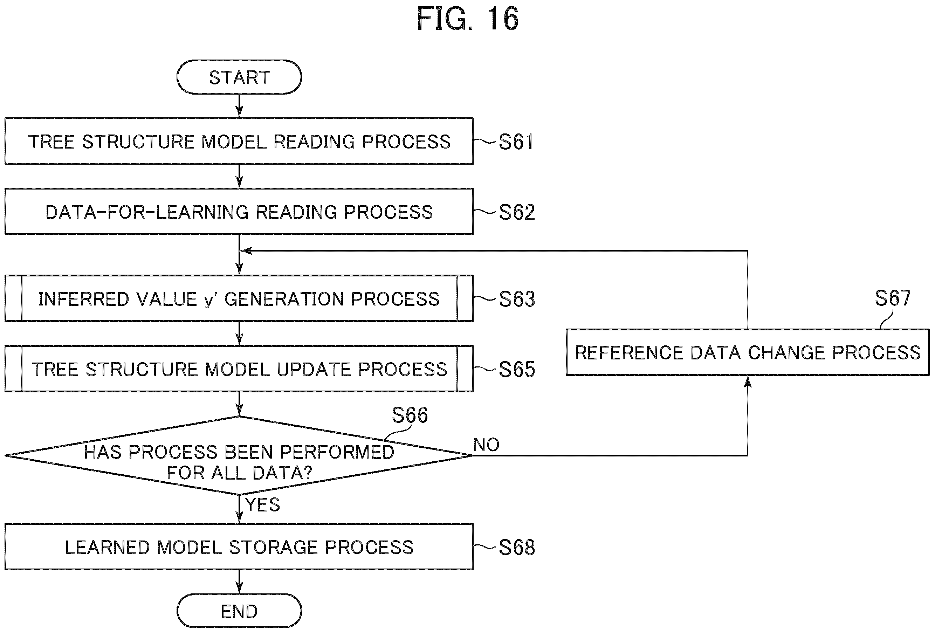

Figure 16 is a general flowchart about a pre-training operation according to the present embodiment. As apparent from Figure 16, the flow of the pre-training operation (S61 to S68) is almost the same as the flow according to the first embodiment (see Figure 8). However, in the present embodiment, since there are a plurality of tree structure models, a detailed flow about the inferred value y' generation process (S63) and a detailed flow about the tree structure model update process (S65) are different from those of the first embodiment.

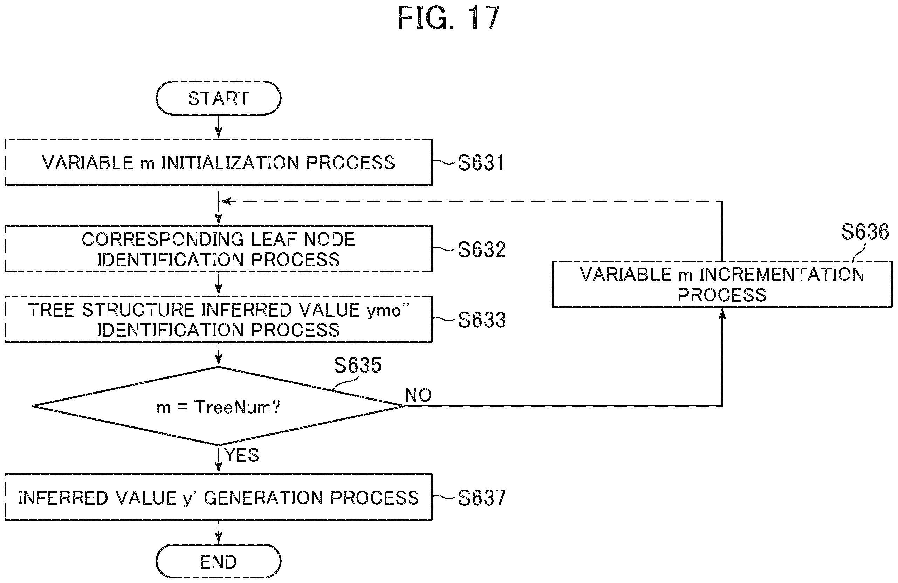

Figure 17 is a detailed flowchart about the inferred value y' generation process (S63) according to the present embodiment. As apparent from Figure 17, when the process starts, a process for initializing the variable m is performed (S631).

After that, a process for identifying a tree structure inferred value y'' indicating an inferred value for each tree structure for all the tree structure models is performed.

First, for one tree structure model, a process for identifying a corresponding leaf node is performed (S632). That is, a process for, with reference data as input data, identifying one route on one tree structure model corresponding to the input data, based on the input data and split values associated with each node of the one tree structure model and identifying a leaf node on the end of the route is performed.

Next, a process for reading an inferred value associated with the identified leaf node and identifying a tree structure inferred value $y_{mo}$" is performed (S633).

Such a series of processes (S632 to S633) is repeated the number of times corresponding to the number of trees (S635: NO) while the variable m is being incremented by 1 (S636).

If the tree structure inferred values $y_{mo}$" are identified for all the trees (S637), a process for generating a final inferred value y' is performed. As shown by the formula below, the inferred value y' is a value obtained by dividing the sum total of the tree structure inferred values $y_{mo}$" by the number of trees TreeNum, that is, an arithmetic mean value of the tree structure inferred values $y_{mo}$". After the inferred value y' generation process, the process ends.

[Formula 5]

$$y' = \frac{\sum\limits_{m=1}^{TreeNum} y_{mo}''}{TreeNum}$$

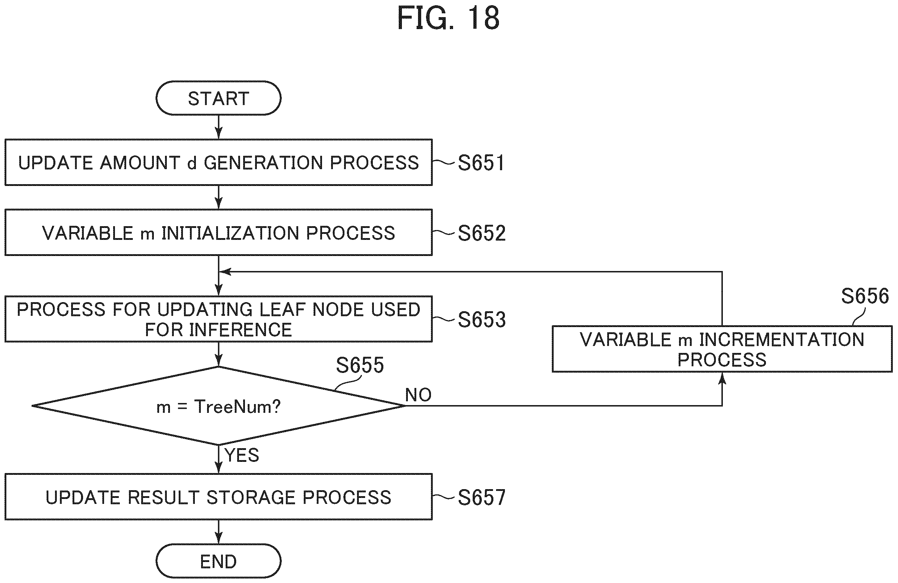

Figure 18 is a detailed flowchart of the tree structure model update process (S65). As apparent from Figure 18, when the process starts, an update amount d generation process is performed (S651). The update amount d is a value obtained by multiplying a difference between a correct answer value y and the generated inferred value y' by a learning rate η (0<η≤1) as shown by the formula below.

[Formula 6]

$$d = \eta\,(y - y')$$

After the update amount d generation process, a variable m initialization process is performed (for example, m=1). After the initialization process, a process for updating the leaf node used for inference for the one tree structure model is executed (S653). More specifically, a tree structure inferred value $y_{mo}$" update process is executed by adding the update amount d to the tree structure inferred value $y_{mo}$" as shown by the formula below.

[Formula 7]

$$y_{mo}'' = y_{mo}'' + d$$

After the tree structure inferred value $y_{mo}$" update process, a process for repeating is performed until the variable m becomes equal to the number of trees TreeNum (S655: YES) while the variable m is being incremented by 1 (S656). That is, thereby, the update process based on the update amount d is performed for the leaf nodes used for inference for all the tree structure models.

When the update process is completed for all the trees (S655: YES), a process for storing an update result, that is, updated learned models and accompanying data into the storage unit 3 is performed (S657). After that, the process ends.

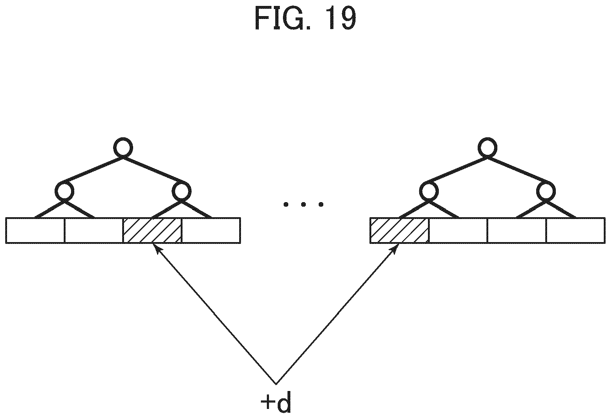

Figure 19 is a conceptual diagram of a case where the update process is performed for a plurality of trees. From Figure 19, it is grasped that a learned model update process is performed by adding the update amount d to the inferred value y'' of the leaf node used for inference for each tree.

(2.2.3 Anomaly detection operation)

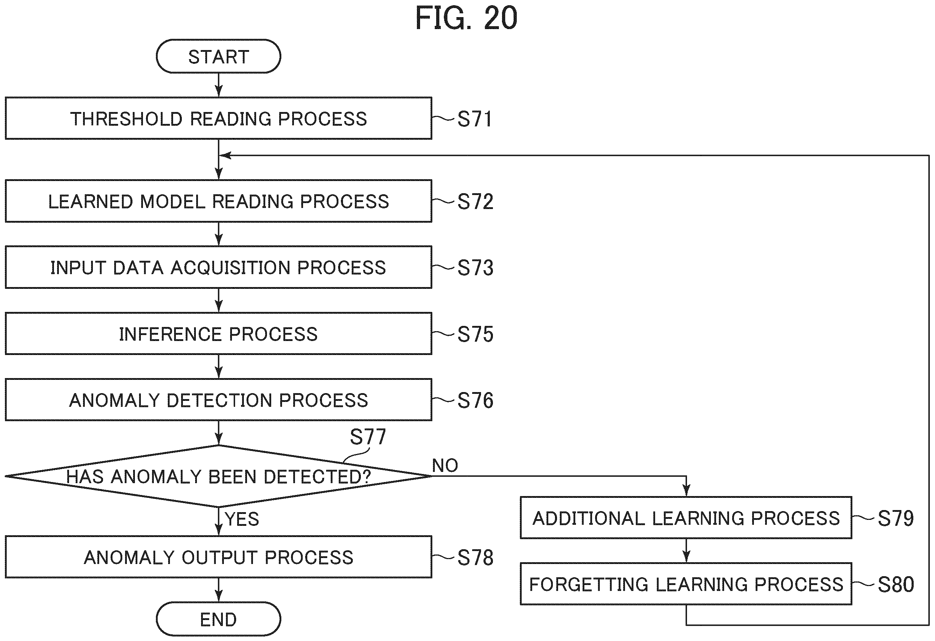

Figure 20 is a general flowchart about an anomaly detection operation according to the present embodiment. As apparent from Figure 20, the flow about the anomaly detection operation according to the present embodiment is almost the same as the flow according to the first embodiment. However, since a model that includes a plurality of tree structure models is used, the present embodiment is different from the first embodiment in details of the inference process (S75), the additional learning process (S79), and the forgetting learning process (S80).

In the inference process (S75) according to the present embodiment, the inferred value y' is generated by a process similar to the process shown in Figure 17. That is, the inferred value y' is generated by generating the tree structure inferred values y'' based on the input data, and calculating an arithmetic mean value of the tree structure inferred values y'' (see Formula 5).

In the additional learning process (S79) of the present embodiment, by adding the update amount d obtained by multiplying the difference between the inferred value y' and the correct answer value y by the learning rate η (see Formula 6) to the inferred value $y_{mo}$'' of the leaf node of each tree structure model, which was used as the basis of inference, the tree structure inferred value $y_{mo}$'' update process is executed (see Formula 7) similarly to the tree structure model update process (S65). At this time, the correct answer value y is set to 1 because of the case of normal value.

In the forgetting learning process (S80) according to the present embodiment, a process for subtracting the update amount for forgetting learning ε from the tree structure inferred values y'' for all the leaf nodes of each tree structure model is performed as shown by the formula below.

[Formula 8]

$$y_{mk}'' = y_{mk}'' - \varepsilon$$

The update amount for forgetting learning ε is a value obtained by dividing an output 1 by L (a natural number) indicating the number of steps corresponding to a sliding window width similarly to the first embodiment.

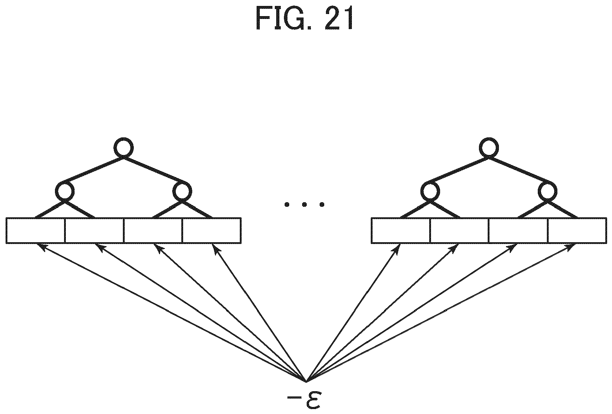

Figure 21 is a conceptual diagram of the forgetting learning process according to the present embodiment. As apparent from Figure 21, in the present embodiment, the update amount for forgetting learning ε is subtracted from the tree structure inferred values y'' for all the leaf nodes of each tree structure model as the forgetting learning process.

According to such a configuration, a tree structure model is updated by performing the forgetting learning process in addition to the additional learning process based on acquired new data, and anomaly detection is performed based on the updated model, and, therefore, it is possible to provide an anomaly detection technique capable of responding to change in the trend of ex post facto data.

(3. Third embodiment)

In the second embodiment, a description has been made on a process in which an arithmetic mean value of tree structure inferred values y'' of a plurality of tree structure models is used as an inferred value y'. In the present embodiment, a description will be made on, among the examples using an ensemble learning model that performs learning/inference processes using a plurality of tree structure models, especially an example using a boosting model that generates an inference output based on outputs of a plurality of tree structure models (for example, by taking the total sum of the outputs of the plurality of tree structure models).

(3.1 Configuration)

Since the hardware configuration of the present embodiment is almost the same as those of the first and second embodiments, detailed description thereof will be omitted.

(3.2 Operations)

(3.2.1 Tree structure model generation operation)

Since the tree structure model generation operation according to the present embodiment is almost the same as that shown in the second embodiment (see Figure 15), detailed description of similar processes will be omitted. That is, in the present embodiment also, TreeNum tree structure models are generated and stored into the storage unit 3.

(3.2.2 Pre-training operation)

Since a pre-training operation according to the present embodiment is also almost the same as that of the second embodiment, detailed description of similar processes will be omitted (see Figure 16). In the present embodiment, however, the inferred value y' generation process (S63) and the tree structure model update process (S65) are different from the second embodiment.

The inferred value y' generation process according to the present embodiment is similar to that of the second embodiment in that a tree structure inferred

value $y_{mo}$" is identified for each tree (S631 to S635). The generation process is, however, different in that the inferred value y' is generated by taking the total sum of all the tree structure inferred values $y_{mo}$" as shown by the formula below.

[Formula 9]

$$y' = \sum_{m=1}^{TreeNum} y_{mo}'$$

Further, the tree structure model update process according to the present embodiment is also similar to that of the second embodiment in the basic flow (see Figure 18). That is, similarly to the second embodiment, an update amount d is generated according to the formula below first.

[Formula 10]

$$d = \eta\,(y - y')$$

After that, similarly to the second embodiment (see Figure 18), the process for updating all the leaf nodes for which the tree structure inferred values y" that became the basis of the inferred value y' were generated and storing a result of the update is performed.

The update process is, however, different from that of the second embodiment in that the tree structure inferred values y" are updated by adding a value obtained by dividing the update amount d by the number of trees TreeNum as shown by the formula below.

[Formula 11]

$$y_{mo}'' = y_{mo}'' + \frac{d}{TreeNum}$$

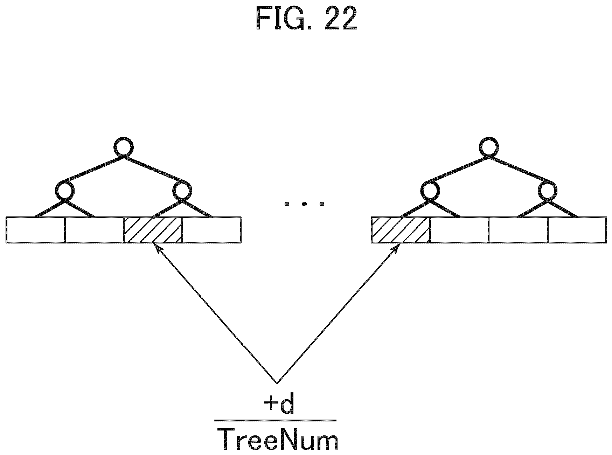

Figure 22 is a conceptual diagram of the case of performing the update process according to the present embodiment. From Figure 22, it is grasped that the update process for the tree structure inferred values y" of each tree is performed by adding the value obtained by dividing the update amount d by the number of trees TreeNum in the present embodiment.

(3.2.3 Anomaly detection operation)

Since an anomaly detection operation according to the present embodiment is also almost the same as that of the second embodiment, detailed description of similar processes will be omitted (see Figure 20). In the present embodiment, however, details of the inferred value y' generation process (S75), the additional learning process (S79), and the forgetting learning process (S80) are different from those of the second embodiment.

In the inference process according to the present embodiment, the inferred value y' is generated as the total sum of the tree structure inferred values y" of each of the trees (see Formula 9).

Further, in the additional learning process according to the present embodiment, the tree structure inferred values y" are generated by a method similar to the method for the pre-training. That is, by adding an amount obtained by dividing the update amount d obtained by multiplying the difference between the inferred value y' and the correct answer value y by the learning rate η (see Formula 10) by the number of trees TreeNum to the inferred value $y_{mo}$" of the leaf node of each tree structure model, which was used as the basis of inference, the tree structure inferred value $y_{mo}$" update process is executed (see Formula 11). At this time, the correct answer value y is set to 1 because of the case of normal value.

Furthermore, in the forgetting learning process according to the present embodiment, the tree structure inferred values y" are updated by subtracting a value obtained by dividing the update amount for forgetting learning ε by the number of trees TreeNum from the tree structure inferred values y" for all the leaf nodes of each tree structure model as shown by the formula below.

[Formula 12]

$$y_{mk}'' = y_{mk}'' - \frac{\varepsilon}{TreeNum}$$

The update amount for forgetting learning ε is a value obtained by dividing an output 1 by L (a natural number) indicating the number of steps corresponding to a sliding window width.

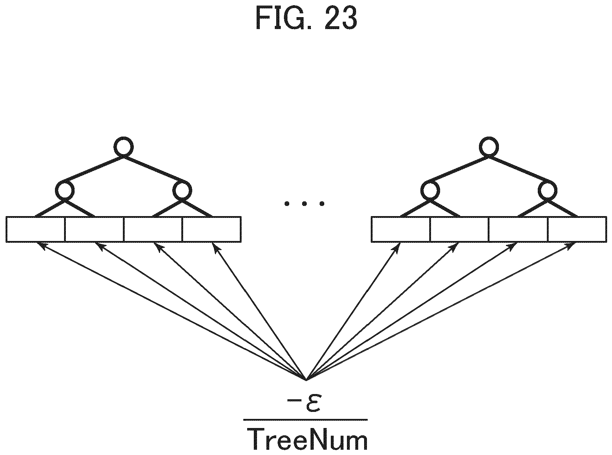

Figure 23 is a conceptual diagram of the forgetting learning process according to the present embodiment. From Figure 23, it is grasped that, in the present embodiment, the value obtained by dividing the update amount for forgetting learning ε by the number of trees TreeNum is subtracted from each of the tree structure inferred values y" for all the leaf nodes of each tree structure model, as the forgetting learning process.

According to such a configuration, a tree structure model is updated by performing the forgetting learning process in addition to the additional learning process based on acquired new data, and anomaly detection is performed based on the updated model, and, therefore, it is possible to provide an anomaly detection technique capable of responding to change in the trend of ex post facto data.

(4. Modifications)

The present invention is not limited to the embodiments described above and can be variously modified and practiced.

Though the update amount for forgetting learning $\varepsilon$ is determined based on the sliding window width L in the forgetting learning process in the embodiments described above, the present invention is not limited to such a configuration. Therefore, the forgetting learning process may be performed by a different method.

For example, as the update amount for forgetting learning, a value obtained by dividing the update amount d by the number of leaf nodes of the m-th tree LeafNum$_m$ may be used.

[Formula 13]

$$\varepsilon_m = \frac{d}{LeafNum_m}$$

According to such a configuration, an update amount according to an update amount for additional learning can be set as the update amount for forgetting learning.

In the case of the first embodiment, a model is updated by subtracting an update amount for forgetting learning $\varepsilon_1$ from the inferred value $y_k'$ as shown by the formula below.

[Formula 14]

$$y_k{'} = y_k{'} - \varepsilon_1$$

In the case of the second embodiment also, models are updated by subtracting an update amount for forgetting learning $\varepsilon_m$ from tree structure inferred values $y_{mk}''$ as shown by the formula below.

[Formula 15]

$$y_{mk}{''} = y_{mk}{''} - \varepsilon_m$$

In the case of the third embodiment, models are updated by subtracting a value obtained by dividing the update amount for forgetting learning $\varepsilon_m$ by TreeNum from inferred values $y_{mk}''$ as shown by the formula below.

[Formula 16]

$$y_{mk}{''} = y_{mk}{''} - \frac{\varepsilon_m}{TreeNum}$$

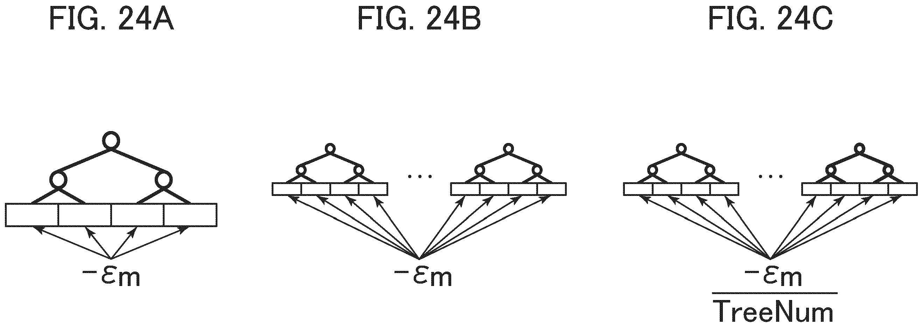

Figure 24 is a conceptual diagram of the forgetting learning processes. As apparent from Figure 24A, when a single tree structure model is used (the first embodiment), the process of subtracting the update amount for forgetting learning $\varepsilon_m$ from the inferred values y' for all the leaf nodes of the tree structure. As apparent from Figure 24B, in the case of using a plurality of tree structure models and adopting a configuration of generating the inferred value y' as the arithmetic mean value of the inferred values y'' of each of the tree structure models (the second embodiment), the process of subtracting the update amount for forgetting learning $\varepsilon_m$ from the inferred values y'' of all the tree structure models is performed. As apparent from Figure 24C, in the case of using a plurality of tree structure models and adopting a configuration of generating the inferred value y' as the total sum of the inferred values y'' of the tree structure models (the third embodiment), the process of subtracting a value obtained by dividing the update amount for forgetting learning $\varepsilon_m$ by the number of trees TreeNum from the inferred values y'' of all the tree structure models is performed.

Embodiments of the present invention have been described above. The above embodiments, however, show only a part of application examples of the present invention and are not intended to limit the technical scope of the present invention to the specific configurations of the embodiments. Further, the above embodiments can be appropriately combined within a range not causing a contradiction.

Industrial Applicability

The present invention can be used in various industries and the like that use machine learning technology.

Reference Signs List

1 control unit
11 tree structure model generation processing unit
12 initial learning processing unit
13 anomaly detection unit
131 data acquisition unit
132 inference processing unit
133 anomaly detection processing unit
135 additional learning processing unit
136 forgetting learning processing unit
137 output processing unit
3 storage unit
5 input unit
6 display unit
7 sound output unit
8 communication unit
9 I/O unit
100 anomaly detection apparatus

**Claims**

1. An anomaly detection apparatus comprising:

    a data acquisition unit acquiring evaluation target data;
    an anomaly detection unit performing anomaly detection about the evaluation target data based on an inference output generated based on input of the evaluation target data to one or more tree structure models; and
    an updated model generation unit generating one or more updated tree structure models by performing an additional learning process based on the evaluation target data and a forgetting learning process for the one or more tree structure models; and
    wherein if a predetermined condition is satisfied, the one or more updated tree structure models are used instead of the one or more tree structure models in the anomaly detection unit and the updated model generation unit.

2. The anomaly detection apparatus according to claim 1, wherein
    the forgetting learning process is performed by subtracting an update amount for forgetting learning from inferred values associated with all leaf nodes of each of the one or more tree structure models.

3. The anomaly detection apparatus according to claim 2, wherein
    the update amount for forgetting learning is set based on a predetermined window width.

4. The anomaly detection apparatus according to claim 2, wherein
    the update amount for forgetting learning is, in each of the one or more tree structure models, a value obtained by dividing an update amount for additional learning generated based on the inference output by the number of leaf nodes of the tree structure model.

5. The anomaly detection apparatus according to claim 2, wherein
    the additional learning process is performed by adding an update amount for additional learning generated based on the inference output to an inferred value associated with a leaf node involved in the generation of the inference output among the leaf nodes of each of the one or more tree structure models.

6. The anomaly detection apparatus according to claim 1, wherein
    the condition is that the one or more updated tree structure models have been generated.

7. The anomaly detection apparatus according to claim 1, wherein
    the anomaly detection unit performs the anomaly detection based on comparison between the inference output and a predetermined threshold.

8. The anomaly detection apparatus according to claim 1, wherein

    as the one or more tree structure models, there is one tree structure model; and
    the inference output in the anomaly detection unit is an output value associated with one leaf node of the tree structure model.

9. The anomaly detection apparatus according to claim 1, wherein

    as the one or more tree structure models, there are a plurality of tree structure models; and
    the inference output in the anomaly detection unit is an arithmetic mean value of output values associated with each leaf node of each of the tree structure models.

10. The anomaly detection apparatus according to claim 1, wherein

    as the one or more tree structure models, there are a plurality of tree structure models; and
    the inference output in the anomaly detection unit is a total sum of output values associated with each leaf node of each of the tree structure models.

11. An anomaly detection system comprising:

    a data acquisition unit acquiring evaluation target data;
    an anomaly detection unit performing anomaly detection about the evaluation target data based on an inference output generated based on input of the evaluation target data to one or more tree structure models; and
    an updated model generation unit generating one or more updated tree structure models by performing an additional learning process based on the evaluation target data and a forgetting learning process for the one or more tree structure models; and
    wherein if a predetermined condition is satisfied, the one or more updated tree structure models are used instead of the one or more tree structure models in the anomaly detection unit and the updated model generation unit.

12. An anomaly detection method comprising:

a data acquisition step of acquiring evaluation target data;

an anomaly detection step of performing anomaly detection about the evaluation target data based on an inference output generated based on input of the evaluation target data to one or more tree structure models; and

an updated model generation step of generating one or more updated tree structure models by performing an additional learning process based on the evaluation target data and a forgetting learning process for the one or more tree structure models; and

wherein if a predetermined condition is satisfied, the one or more updated tree structure models are used instead of the one or more tree structure models in the anomaly detection step and the updated model generation step.

**13.** An anomaly detection program comprising:

a data acquisition step of acquiring evaluation target data;

an anomaly detection step of performing anomaly detection about the evaluation target data based on an inference output generated based on input of the evaluation target data to one or more tree structure models; and

an updated model generation step of generating one or more updated tree structure models by performing an additional learning process based on the evaluation target data and a forgetting learning process for the one or more tree structure models; and

wherein if a predetermined condition is satisfied, the one or more updated tree structure models are used instead of the one or more tree structure models in the anomaly detection step and the updated model generation step.

**14.** An information processing apparatus comprising:

a data acquisition unit acquiring evaluation target data;

an anomaly detection unit performing anomaly detection about the evaluation target data based on an inference output generated based on input of the evaluation target data to one or more tree structure models; and

an updated model generation unit generating one or more updated tree structure models by performing an additional learning process based on the evaluation target data and a forgetting learning process for the one or more tree structure models; and

wherein if a predetermined condition is satisfied, the one or more updated tree structure models are used instead of the one or more tree structure models in the anomaly detection unit and the updated model generation unit.

EP 4 517 607 A1

# FIG. 1

# FIG. 2

# FIG. 3

```
                    ┌─────────────┐
                    │    START    │
                    └──────┬──────┘
                           │
      ┌────────────────────▼────────────────────┐
      │  DATA-FOR-TREE-STRUCTURE-GENERATION      │  S11
      │           READING PROCESS                │
      └────────────────────┬────────────────────┘
                           │
      ┌────────────────────▼────────────────────┐
      │   VARIABLE n INITIALIZATION PROCESS      │  S12
      └────────────────────┬────────────────────┘
                           │
      ┌────────────────────▼────────────────────┐
      │   STATISTICAL DATA IDENTIFICATION AND    │  S13
      │           STORAGE PROCESS                │
      └────────────────────┬────────────────────┘
                           │                S15
                      ◇────▼────◇                   ┌──────────────────────┐ S16
                     ╱   n = N?   ╲  NO             │  VARIABLE n          │
                     ╲            ╱ ──────────────→ │  INCREMENTATION      │
                      ◇────┬────◇                   │  PROCESS             │
                           │ YES                    └──────────────────────┘
      ┌────────────────────▼────────────────────┐
      │   TREE STRUCTURE MODEL GENERATION        │  S17
      │           PROCESS                        │
      └────────────────────┬────────────────────┘
                           │
                    ┌──────▼──────┐
                    │     END     │
                    └─────────────┘
```

# FIG. 4

| STEP | $X_1$ | $X_2$ | $X_3$ |
|:---:|:---:|:---:|:---:|
| 1 | 1 | 31 | 0 |
| 2 | 8 | 35 | 5 |
| ⋮ | ⋮ | ⋮ | ⋮ |
| T | 42 | 39 | 12 |

# FIG. 5

|  | $X_1$ | $X_2$ | $X_3$ |
|---|---|---|---|
| MINIMUM VALUE | 1 | 30 | 0 |
| MAXIMUM VALUE | 42 | 40 | 12 |

## FIG. 6

START

↓

PROCESS FOR SETTING REFERENCE NODE AS ROOT NODE — S171

↓

INPUT SEQUENCE SELECTION PROCESS — S172

↓

PROCESS FOR SETTING SPLIT VALUE BASED ON STATISTICAL DATA — S173

↓

HAS PROCESS BEEN PERFORMED FOR ALL NODES? — S175

- NO → PROCESS FOR SETTING REFERENCE NODE BASED ON PREDETERMINED RULES — S176 (loops back)
- YES ↓

PROCESS FOR INITIALIZING VALUES OF LEAF NODES — S177

↓

TREE STRUCTURE DATA STORAGE PROCESS — S178

↓

END

FIG. 7

FIG. 8

EP 4 517 607 A1

# FIG. 9

| STEP | $X_1$ | $X_2$ | $X_3$ | Y |
|------|------|------|------|------|
| 1 | 1 | 31 | 0 | 1 |
| 2 | 8 | 35 | 5 | −1 |
| ⋮ | ⋮ | ⋮ | ⋮ | ⋮ |
| T | 42 | 39 | 12 | 1 |

# FIG. 10

START

CORRESPONDING LEAF NODE IDENTIFICATION PROCESS ~S231

INFERRED VALUE y' GENERATION PROCESS ~S232

END

## FIG. 11

```
        ┌─────────────┐
        │    START    │
        └─────────────┘
               │
               ▼
┌───────────────────────────────────────┐
│ UPDATE AMOUNT d GENERATION PROCESS     │──S251
└───────────────────────────────────────┘
               │
               ▼
┌───────────────────────────────────────┐
│ PROCESS FOR UPDATING LEAF NODE USED    │──S252
│            FOR INFERENCE               │
└───────────────────────────────────────┘
               │
               ▼
┌───────────────────────────────────────┐
│ UPDATE RESULT STORAGE PROCESS          │──S253
└───────────────────────────────────────┘
               │
               ▼
        ┌─────────────┐
        │     END     │
        └─────────────┘
```

# FIG. 12

+d

# FIG. 13

START

THRESHOLD READING PROCESS — S30

LEARNED MODEL READING PROCESS — S31

INPUT DATA ACQUISITION PROCESS — S32

INFERENCE PROCESS — S33

ANOMALY DETECTION PROCESS — S35

HAS ANOMALY BEEN DETECTED? — S36

NO

YES

ANOMALY OUTPUT PROCESS — S37

END

ADDITIONAL LEARNING PROCESS — S38

FORGETTING LEARNING PROCESS — S39

# FIG. 14

## FIG. 15

```
                    ┌──────────┐
                    │  START   │
                    └────┬─────┘
                         │
                         ▼
   ┌─────────────────────────────────────────┐
   │ DATA-FOR-TREE-STRUCTURE-GENERATION       │~S41
   │           READING PROCESS                │
   └────────────────┬────────────────────────┘
                    │
                    ▼
   ┌─────────────────────────────────────────┐
   │  VARIABLE n INITIALIZATION PROCESS       │~S42
   └────────────────┬────────────────────────┘
                    │
                    ▼
   ┌─────────────────────────────────────────┐      ┌──────────────────────┐
   │  STATISTICAL DATA IDENTIFICATION AND     │~S43  │  VARIABLE n          │ S46
   │          STORAGE PROCESS                 │      │  INCREMENTATION      │
   └────────────────┬────────────────────────┘      │  PROCESS             │
                    │         S45                    └──────────────────────┘
                    ▼                        NO                  ▲
               ◇ n = N? ◇──────────────────────────────────────┘
                    │ YES
                    ▼
   ┌─────────────────────────────────────────┐
   │  VARIABLE m INITIALIZATION PROCESS       │~S47
   └────────────────┬────────────────────────┘
                    │
                    ▼
   ┌─────────────────────────────────────────┐      ┌──────────────────────┐
   │  TREE STRUCTURE MODEL GENERATION         │~S48  │  VARIABLE m          │ S50
   │            PROCESS                       │      │  INCREMENTATION      │
   └────────────────┬────────────────────────┘      │  PROCESS             │
                    │         S49                    └──────────────────────┘
                    ▼                        NO                  ▲
               ◇ m = TreeNum? ◇─────────────────────────────────┘
                    │ YES
                    ▼
              ┌──────────┐
              │   END    │
              └──────────┘
```

EP 4 517 607 A1

# FIG. 16

START

↓

TREE STRUCTURE MODEL READING PROCESS — S61

↓

DATA-FOR-LEARNING READING PROCESS — S62

↓

INFERRED VALUE y' GENERATION PROCESS — S63

↓

TREE STRUCTURE MODEL UPDATE PROCESS — S65

↓

HAS PROCESS BEEN PERFORMED FOR ALL DATA? — S66

NO → REFERENCE DATA CHANGE PROCESS — S67 (loops back to S63)

YES ↓

LEARNED MODEL STORAGE PROCESS — S68

↓

END

# FIG. 17

```
           ( START )
               │
               ▼
┌──────────────────────────────┐
│ VARIABLE m INITIALIZATION PROCESS │─── S631
└──────────────────────────────┘
               │
               ▼ ◄─────────────────────────────────┐
┌──────────────────────────────┐                   │
│   CORRESPONDING LEAF NODE     │─── S632           │
│   IDENTIFICATION PROCESS      │                   │
└──────────────────────────────┘      S636         │
               │              ┌──────────────────────────┐
               ▼              │ VARIABLE m INCREMENTATION │
┌──────────────────────────────┐ │        PROCESS          │
│ TREE STRUCTURE INFERRED VALUE ymo″ │─── S633  └──────────────────────────┘
│   IDENTIFICATION PROCESS      │              ▲
└──────────────────────────────┘              │
               │          S635                 │
               ▼                               │
         ╱───────────────╲        NO           │
        ╱  m = TreeNum?   ╲───────────────────┘
         ╲───────────────╱
               │ YES
               ▼
┌──────────────────────────────┐
│ INFERRED VALUE y' GENERATION PROCESS │─── S637
└──────────────────────────────┘
               │
               ▼
           ( END )
```

## FIG. 18

```
            START
              │
              ▼
┌──────────────────────────────┐
│ UPDATE AMOUNT d GENERATION    │── S651
│ PROCESS                       │
└──────────────────────────────┘
              │
              ▼
┌──────────────────────────────┐
│ VARIABLE m INITIALIZATION     │── S652
│ PROCESS                       │
└──────────────────────────────┘
              │
              ▼ ◄─────────────────────────────────┐
┌──────────────────────────────┐                  │
│ PROCESS FOR UPDATING LEAF NODE│── S653           │
│ USED FOR INFERENCE            │        S656      │
└──────────────────────────────┘   ┌──────────────────────────┐
              │          S655       │ VARIABLE m INCREMENTATION │
              ▼                     │ PROCESS                   │
         ╱─────────╲      NO        └──────────────────────────┘
        ╱ m =       ╲───────────────────────┘
        ╲ TreeNum?  ╱
         ╲─────────╱
              │ YES
              ▼
┌──────────────────────────────┐
│ UPDATE RESULT STORAGE PROCESS │── S657
└──────────────────────────────┘
              │
              ▼
            END
```

EP 4 517 607 A1

# FIG. 19

+d

# FIG. 20

```
                    ┌─────────┐
                    │  START  │
                    └─────────┘
                         │
                         ▼
        ┌────────────────────────────────┐
        │  THRESHOLD READING PROCESS      │──S71
        └────────────────────────────────┘
                         │
                         ▼
        ┌────────────────────────────────┐
        │  LEARNED MODEL READING PROCESS  │──S72
        └────────────────────────────────┘
                         │
                         ▼
        ┌────────────────────────────────┐
        │  INPUT DATA ACQUISITION PROCESS │──S73
        └────────────────────────────────┘
                         │
                         ▼
        ┌────────────────────────────────┐
        │  INFERENCE PROCESS              │──S75
        └────────────────────────────────┘
                         │
                         ▼
        ┌────────────────────────────────┐
        │  ANOMALY DETECTION PROCESS      │──S76
        └────────────────────────────────┘
                         │
                         ▼            S77
              ◇ HAS ANOMALY BEEN DETECTED? ◇──NO──┐
                         │                         │
                        YES                        ▼
                         │         ┌──────────────────────────────┐
                         ▼         │ ADDITIONAL LEARNING PROCESS   │──S79
        ┌────────────────────────┐ └──────────────────────────────┘
        │ ANOMALY OUTPUT PROCESS │──S78           │
        └────────────────────────┘                ▼
                         │         ┌──────────────────────────────┐
                         ▼         │ FORGETTING LEARNING PROCESS   │──S80
                    ┌─────────┐    └──────────────────────────────┘
                    │   END   │
                    └─────────┘
```

# FIG. 21

# FIG. 22

$$\frac{+d}{TreeNum}$$

# FIG. 23

$$\dfrac{-\varepsilon}{TreeNum}$$

FIG. 24A    FIG. 24B    FIG. 24C

## INTERNATIONAL SEARCH REPORT

| International application No. |
| --- |
| **PCT/JP2022/019114** |

### A. CLASSIFICATION OF SUBJECT MATTER

*G06N 20/00*(2019.01)i; *G06N 20/20*(2019.01)i
FI:  G06N20/00; G06N20/20

According to International Patent Classification (IPC) or to both national classification and IPC

### B. FIELDS SEARCHED

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021/171863 A1 (OMRON CORPORATION) 02 September 2021 (2021-09-02) paragraphs [0002]-[0005], [0025]-[0078], fig. 3, 8-12 | 1, 6-7, 11-14 |
| Y | | 8-10 |
| A | | 2-5 |
| Y | WO 2021/256135 A1 (AISING LTD) 23 December 2021 (2021-12-23) paragraphs [0065]-[0071], [0113]-[0114], fig. 4 | 8 |
| Y | WO 2020/008919 A1 (AISING LTD) 09 January 2020 (2020-01-09) paragraphs [0080]-[0083] | 9-10 |
| A | HOENS, T. Ryan et al. Learning from streaming data with concept drift and imbalance: an overview. Progress in Artificial Intelligence [online]. 2012, no. 1, pp. 89-101, [retrieval date 05 July 2022], Internet: <URL: https://link.springer.com/article/10.1007/s13748-011-0008-0> <DOI: https://doi.org/10.1007/s13748-011-0008-0> in particular, chapters 4, 6 | 1-14 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 July 2022** | **12 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/019114**

| Patent document cited in search report | | | Publication date (day/month/year) | Patent family member(s) | | | Publication date (day/month/year) |
|---|---|---|---|---|---|---|---|
| WO | 2021/171863 | A1 | 02 September 2021 | JP | 2021-135812 | A | |
| WO | 2021/256135 | A1 | 23 December 2021 | JP | 6795240 | B1 | |
| WO | 2020/008919 | A1 | 09 January 2020 | EP | 3819827 | A1 | |
| | | | | paragraphs [0079]-[0082] | | | |
| | | | | US | 2021/0125101 | A1 | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 6795240 A